# EUROPÄISCHE PATENTSCHRIFT

(11) **EP 1 273 502 B1**
(45) Veröffentlichungstag und Bekanntmachung des Hinweises auf die Patenterteilung: **12.04.2006**
(21) Anmeldenummer: 01116270.8
(22) Anmeldetag: 05.07.2001
(51) Int. Cl.: B62D 25/08

(54) **Kraftfahrzeugkarosserie**
Motor vehicle body
Carrosserie de véhicule automobile

(43) Veröffentlichungstag der Anmeldung: 08.01.2003
(73) Patentinhaber: Ford Global Technologies, LLC, Dearborn, MI 48126 (US)
(72) Erfinder: Dörfler, Thomas, 50374 Erftstadt (DE); Behnke, Guenter, 50374 Köln (DE)
(74) Vertreter: Drömer, Hans-Carsten

(56) Entgegenhaltungen:
- PATENT ABSTRACTS OF JAPAN vol. 018, no. 496 (M-1674), 16. September 1994 (1994-09-16) -& JP 06 166385 A (SUZUKI MOTOR CORP), 14. Juni 1994 (1994-06-14)
- PATENT ABSTRACTS OF JAPAN vol. 018, no. 177 (M-1582), 25. März 1994 (1994-03-25) & JP 05 338558 A (TOYOTA AUTOM LOOM WORKS LTD), 21. Dezember 1993 (1993-12-21)
- PATENT ABSTRACTS OF JAPAN vol. 2000, no. 03, 30. März 2000 (2000-03-30) -& JP 11 348826 A (FUJI HEAVY IND LTD), 21. Dezember 1999 (1999-12-21)

## Beschreibung

Die Erfindung betrifft eine Kraftfahrzeugkarosserie nach dem Oberbegriff des Patentanspruches 1.

Kraftfahrzeuge, die am hinteren Radhaus eine große Durchladeöffnung aufweisen, sind neben den typischen Kombifahrzeugen vor allem dreitürige und fünftürige Fahrzeuge, bei denen die Heckklappe als Tür mitgezählt wird und zwischen dem Kofferraum und dem Passagierraum keine Trennwand vorgesehen ist, so daß der Kofferraum durch Umklappen der hinteren Sitzbank vergrößert werden kann. Bei klassischen Limousinen mit durchgehender Rückwand am Rücksitz ist in der Regel keine Durchladeöffnung vorgesehen, nur für den Fall, daß diese Rückwand fehlt oder eine Ausnehmung in der Rückwand zum Durchführen langer Gegenstände wie z.B. Ski vorgesehen ist, ist die Erfindung auch für Limousinen klassischen Stils anwendbar. Bei Fahrzeugen ohne Rückwand oder mit einer Rückwand, die Durchladeöffnungen aufweist, bildet sich im Bereich des Überganges von Unterboden zu Radhaus ein Schamiereffekt aus, der vor allem die Torsionssteifigkeit des Gesamtfahrzeuges reduziert.

Die Torsionssteifigkeit in diesem Bereich ist aus konstruktiven Gründen schwierig zu realisieren. Verstärkungen, die innen im Durchgang zwischen Kofferraum und Passagierraum angebracht werden, reduzieren die Durchladeöffnung in ihrer Größe. Weiterhin erfordert das Einfügen von Verstärkungen nach dem Zusammenbau von Seitenwand und Unterboden zusätzlichen nachträglichen Fertigungsaufwand.

Aus der JP 06166385, die den nächstliegenden Stand der Technik bildet, ist eine Karosserie bekannt, bei der ein Längsträger unter einem hinteren Unterboden neben einem Radhaus angeordnet ist. Aufgrund der Ausbuchtung im Bereich des Federbeindomes ergeben sich vor und hinter dem Federbeindom Flächen im Radhaus, die gegenüber der Fläche des Radhauses im Bereich des Federbeindomes nach außen hin beabstandet sind. Zur Erhöhung der Festigkeit und Steifigkeit wird eine Verstärkung von innen in der Durchladeöffnung im Bereich des Federbeindomes vorgesehen, wobei diese Verstärkung mit Radhaus und Unterboden kraftschlüssig verbunden ist. Nachteilig ist jedoch die mit der Verstärkung einhergehende Reduzierung des lichten Querschnittes der Durchladeöffnung.

Eine weitere Maßnahme zur Erhöhung von Festigkeit und Steifigkeit im Bereich des hinteren Radhauses zeigt die JP 05338558. Auch hier ist ein ähnlicher Aufbau wie im Oberbegriff des Anspruches 1 gezeigt. Anders als in der JP 06166385 wird jedoch die Steifigkeitserhöhung durch Streben erreicht, die sowohl beide Federbeindome als auch die Federbeindome mit dem Bodenblech verbinden. Obwohl eine solche Anordnung sehr hohe Festigkeit bietet, ist damit die Durchladeöffnung sehr stark verkleinert.

Aus der US-Patentschrift US 5,829,824 ist eine Kraftfahrzeugkarosserie bekannt, bei der Verstärkungsstreben zwischen linkem und rechtem Radhaus vorgesehen sind. Dadurch wird es ermöglicht, den Laderaum selbst zu vertiefen ohne die Karosseriesteifigkeit zu verringern. Durch den gewonnenen Laderaum können auch größere Gepäckstücke im Laderaum verstaut werden. Auch hier wird jedoch die Durchladeöffnung des vergrößerten Laderaumes durch die Verstärkungsstreben selbst wieder nachteilig reduziert. Ferner bedeutet das Einfügen der Verstärkungsstreben einen erhöhten Fertigungsaufwand. Die Köpfe der Befestigungsschrauben sind vom Laderaum her zu sehen, so daß diese den optischen Eindruck verschlechtern und eine Gefahr der Beschädigung von im Laderaum aufgenommenen Gegenständen darstellen.

Aus der europäischen Patentanmeldung EP 0 980 817 A2 ist eine Karosseriestruktur bekannt, bei der der Stoßdämpfer an der Unterseite des Unterbodens angreift, so daß durch eine Verschmälerung des Radhauses die Durchladeöffnung vergrößert werden kann. Zusätzliche Verstärkungs- oder Versteifungsmaßnahmen zur Verbesserung der Torsionssteifigkeit im Bereich des Überganges von dem Unterboden zum Radhaus werden dort nicht vorgeschlagen.

Ausgehend von den beschriebenen Nachteilen im Stand der Technik liegt der Erfindung die Aufgabe zugrunde, die Steifigkeit einer Kraftfahrzeugkarosserie mit einer im Bereich des hinteren Radhauses vorgesehenen Durchladeöffnung zu erhöhen, ohne daß die Durchladeöffnung in ihrem Querschnitt verringert werden muß.

Das Problem wird erfindungsgemäß gelöst mit den Merkmalen des Patentanspruches 1. Vorteilhafte Weiterbildungen der Erfindung sind in den Unteransprüchen erfaßt.

Indem zwischen der beabstandeten äußeren Fläche und dem Längsträger ein Verstärkungsteil vorgesehen ist, wobei das Verstärkungsteil im unteren Bereich der äußeren Fläche und an der Unterseite des Längsträgers kraftschlüssig befestigt ist, kann das durch die Ausbuchtung relativ biegesteife Radhaus mittels des Verstärkungsteiles biegesteif an den Längsträger angebunden werden. Dadurch wird Schamiereffekt zwischen Radhaus und "Längsträger und dem damit verbundenen Unterboden bei einer Torsionsbeanspruchung der Kraftfahrzeugkarosserie verringert und das Verstärkungsteil ragt nicht in den Fahrzeuginnenraum, der Unterboden bleibt im Fahrzeuginnenraum in diesem Bereich eben und es wird kein zusätzlicher Innenraum für die Anbringung des Verstärkungsteiles benötigt.

Der Längsträger ist im Querschnitt U-förmig nach oben geöffnet ausgebildet. Das Verstärkungsteil ist W-förmig ausgebildet und liegt am Boden des Längsträgers, dessen Seitenwand, dem Unterboden der Karosseriestruktur und dem hochstehenden Radhaus an. Damit ist das Verstärkungsteil an möglichst vielen Teilen befestigt, so daß sich eine gute stabile Verbindung ergibt. Vorteilhaft weist der Längsträger im Bereich der Ausbuchtung des Radhauses einen hochstehenden Schweißflansch auf, an dem das Radhaus mit einer sich in Richtung des Schweißflansches erstreckenden inneren Fläche befestigt ist.

Die Verbindung von Verstärkungsteil, Radhaus, Längsträger und Unterboden kann bei dieser Anordnung ausschließlich durch Punktschweißungen erfolgen, die einen wesentlich geringeren Fertigungsaufwand bedeuten als andere im Automobilbau übliche Fügungsverfahren wie z. B. Schutzgasschweißen.

Vorteilhafterweise ist ein Querträger vorgesehen, welcher mit dem Längsträger verbunden ist. Das Verstärkungsteil wird dann bevorzugt im Bereich der Verbindungsstelle von Längsträger und Querträger am Längsträger und/oder dem Querträger befestigt. Somit entsteht ein besonders steifer Verbindungsknoten zwischen dem Radhaus, dem Längsträger und dem Querträger, der Biegemomente des Radhauses direkt in den Querträger leitet (und umgekehrt).

Die W-förmige Struktur des Verstärkungsteiles kann durch einen Abschnitt unterbrochen sein, der sich direkt von der Unterkante des Radhauses zu der unteren Kante des Längsträgers, welche sich durch die sich von der Unterseite des Längsträgers nach oben hin erstreckende Seitenwand desselben ergibt, erstreckt. Der Abschnitt wirkt als zusätzliche Verstärkungsmaßnahme und stützt die Unterseite des Radhause direkt zu der Unterseite des Längsträgers ab, so daß die Kraftfahrzeugkarosserie für eine zusätzliche Kraftangriffsrichtung versteift wird. Ferner wird durch den Abschnitt die durch die Form des W-förmigen Verstärkungsteils bedingte Knickgefahr desselben beseitigt.

Bei einer weiteren vorteilhaften Ausgestaltung steht die quer verlaufende Fläche des Radhauses in direkter Verbindung mit der Stegfläche des Verstärkungsteiles. Durch die direkt Anbindung der quer verlaufenden Fläche des Radhauses wird eine noch höhere Knotensteifigkeit der Karosserie in diesem Bereich erzielt.

Eine weitere Ausführung sieht vor, daß die innere Fläche des Radhauses in direkter Verbindung mit der Flanschfläche des Verstärkungsteiles steht. Eine solche Anordnung ist sinnvoll, wenn der Längsträger über keinen senkrecht verlaufenden Flansch verfügt, der in direkter Verbindung mit der inneren Fläche des Radhauses steht. Dies ist der Fall, wenn z. B. der Längsträger mit einigem Abstand weiter innen zur Fahrzeugmitte hin verläuft, oder aber es ist kein Längsträger im Bereich der Ausbuchtung vorhanden. Die Aufgabe des Längsträgers, die steife Anbindung an die innere Fläche des Radhauses, wird dann von der Flanschfläche des Verstärkungsteiles übemommen.

Bei der Gestaltung des Verstärkungsteiles spielt es keine Rolle, ob das Verstärkungsteil - in Fahrtrichtung gesehen - vor oder hinter der Ausbuchtung angeordnet ist. Demnach können an einem Radhaus auch zwei Verstärkungsteile angeordnet sein, was die Steifigkeit der Karosserie noch weiter erhöht.

Das Verstärkungsteil kann auch einstückig ausgeführt sein und sich - in Fahrtrichtung gesehen - vor und hinter der Ausbuchtung erstrecken. In diesem Fall weist das Verstärkungsteil vorteilhafterweise mindestens zwei Abschnitte auf, die die äußeren Flächen des Radhauses direkt mit dem Längsträger verbinden. In diesem Zusammenhang sei darauf hingewiesen, daß durch die Ausbuchtung mindestens eine äußere Fläche, bevorzugt aber zwei äußere Flächen entstehen.

Die Erfindung wird nachfolgend anhand eines bevorzugten Ausführungsbeispieles näher erläutert.

Die Zeichnungen zeigen:
- Figur 1: Kraftfahrzeugkarosserie mit einem Verstärkungsteil und einem, mit einer Einbuchtung versehenen Radhaus;
- Figur 2 a: Querschnittsdarstellung der Verbindung von Radhauslängsträger und Unterboden in Schnittrichtung A-A;

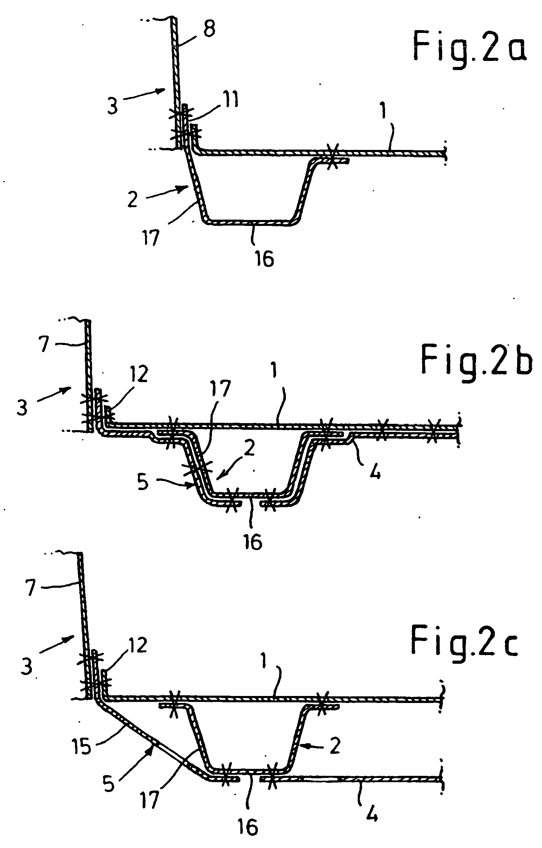

- Figur 2 b: Querschnittsdarstellung der Verbindung zwischen Radhauslängsträger und Unterboden mit Verstärkungsteil in Schnittrichtung B-B;
- Figur 2 c: Querschnittsdarstellung der Befestigung von Radhauslängsträger und Unterboden in Schnittrichtung C-C;

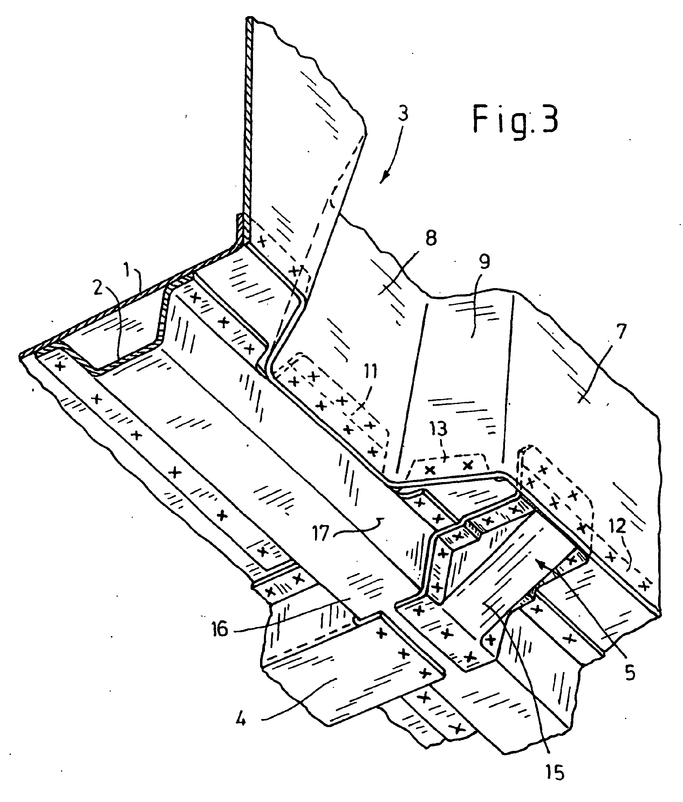

- Figur 3: Kraftfahrzeugkarosserie mit einem Verstärkungsteil zwischen Längsträger und Radhaus aus Sicht von unten;

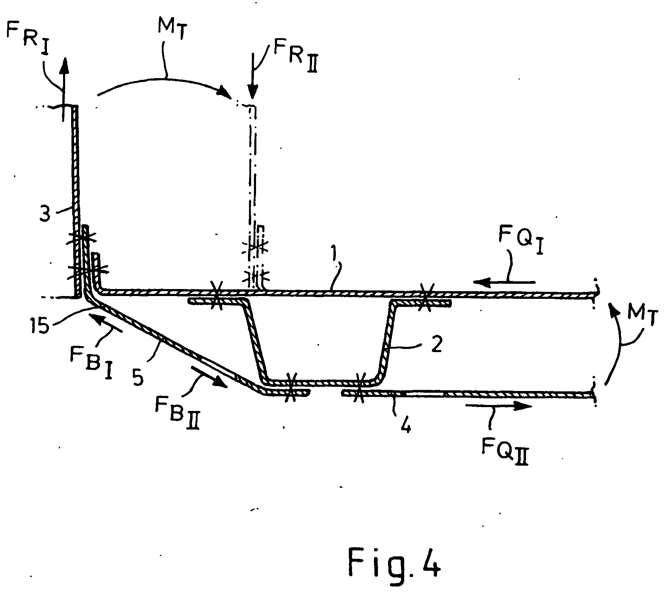

- Figur 4: Kräfteverlauf bei Torsionsbeanspruchung; und

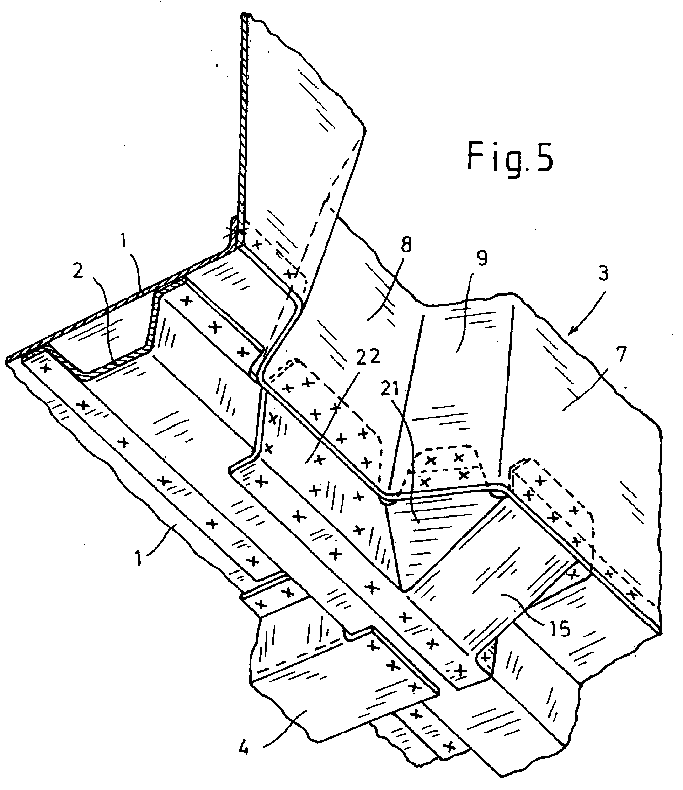

- Figur 5: die Ansicht einer weitere Ausführung des Verstärkungsteiles.

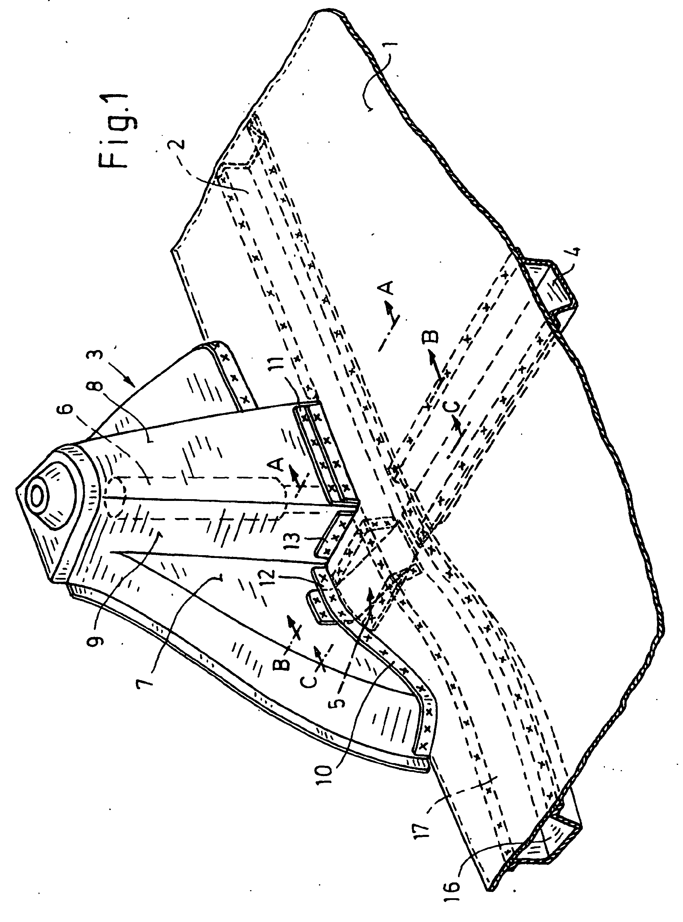

In Figur 1 ist ein Ausschnitt einer Kraftfahrzeugkarosserie mit einem Unterboden 1, einem Längsträger 2 und einem Querträger 4 zu erkennen. Der Längsträger 2 dient, wie auch der Querträger 4 der Versteifung der Karosserie, wobei der Längsträger 2 in Längsrichtung des Kraftfahrzeuges verläuft und der Querträger 4 quer zur Fahrtrichtung. Der Längsträger 2, wie auch der Querträger 4 sind nach oben hin vom Unterboden 1 abgedeckt, so daß diese vom Fahrzeuginnenraum her nicht zu sehen sind. Vom Unterboden 1 erstreckt sich im wesentlichen nach oben das Radhaus 3. Im Radhaus 3 ist eine Ausbuchtung vorgesehen, in der das gestrichelt dargestellte Feder- bzw. Dämpferbein 6 aufgenommen ist. Der Längsträger 2 ist im Bereich des Radhauses 3 mit einem hochstehenden Schweißflansch 11 versehen, an dem das Radhaus 3 mit der Fläche 8 im Bereich der Unterseite mittels Punktschweißungen befestigt ist.

Durch die Ausbuchtung ist die Oberfläche des Radhauses 3 in einer parallel zur Fahrzeuglängsrichtung verlaufende innere Fläche 8 unterteilt, von der sich dann winklig die quer zur Fahrzeuglängsrichtung erstreckende Fläche 9 stufenförmig absetzt. Die Oberfläche des Radhauses 3 geht dann von der quer zur Fahrzeuglängsrichtung verlaufenden Fläche 9 in eine wiederum parallel zur Fahrzeuglängsrichtung verlaufende äußere Fläche 7 über, wobei die Fläche 7- in Fahrtrichtung gesehen - sowohl vor als auch hinter der Ausbuchtung liegen kann.

Am Unterboden 1 sind weiterhin hochstehende Schweißflansche 12 und 13 vorgesehen, die im unteren Bereich des Radhauses 3 an den Flächen 7 und 9 anliegen. Zur Versteifung der Kraftfahrzeugkarosserie ist ein Verstärkungsteil 5 vorgesehen, das am Radhaus 3 im unteren Bereich der äußeren Fläche 7 befestigt ist. Es ist W-förmig ausgebildet und auf dem Unterboden 1, der Seitenwand 17 und der Unterseite 16 des Längsträgers 2 befestigt. Damit ist die äußere Fläche 7 neben einer Verbindung mit dem Unterboden 1 zusätzlich kraftschlüssig mit dem Längsträger 2 verbunden.

Das Verstärkungsteil 5 ist in vorteilhafter Weise im Bereich der Verbindung von Längsträger 2 und Querträger 4 am Längsträger 2 befestigt. Auf diese Weise ergibt sich ein besonders steifer Verbindungsknoten gebildet durch den Querträger 4, Längsträger 2 und dem Radhaus 3 verbunden durch das Verstärkungsteil 5. Neben der vorteilhaften Verringerung des Scharniereffektes zwischen dem Radhaus 3 und dem Unterboden 1 wird durch das Verstärkungsteil . 5 eine zusätzliche Möglichkeit geschaffen, Kräfte aus dem Radhaus 3 in den Längsträger 2 einzuleiten.

In Figur 2 a bis 2 c ist die Befestigung des Radhauses 3 an dem Längsträger 2 und dem Unterboden 1 in Querschnittsdarstellung zu erkennen. In Figur 2 a ist die Befestigung des Radhauses 3 in Schnittrichtung A-A im Bereich der sich in Längsrichtung erstreckenden inneren Fläche 8 dargestellt. Der Längsträger 2 weist auf seiner dem Radhaus 3 zugewandten Seite einen hochstehenden Schweißflansch 11 auf, an dem das Radhaus 3 an der inneren Fläche 8 durch Punktschweißungen befestigt ist. Auf der vom Radhaus 3 abgewandten Seite weist der Längsträger 2 einen im wesentlichen horizontalen Flansch auf, auf dem der Unterboden 1 ebenfalls mittels Punktschweißungen befestigt ist. Der Unterboden 1 deckt den Längsträger 2 zum Fahrzeuginnenraum hin ab und ist an seinem, dem Radhaus zugewandten, Ende zu einem Schweißflansch hochgebogen. Der Unterboden 1 ist dann ebenfalls durch Punktschweißungen an dem hochstehenden Schweißflansch 11 des Längsträgers 2 befestigt und damit mittelbar auch an dem Radhaus 3. Durch den hochstehenden Schweißflansch 11 werden während des Fahrbetriebes auftretende Kräfte aus dem Radhaus 3 in den Längsträger 2 eingeleitet.

In Figur 2 b ist die Befestigung von Radhaus 3 und Längsträger 2 im Bereich des Verstärkungsteiles 5 in Schnittrichtung B-B zu erkennen. Am Längsträger 2 ist auf der vom Radhaus 3 abgewandten Seite der Querträger 4 an der Unterseite des Längsträgers 2 mittels Punktschweißungen befestigt. Auf der dem Radhaus 3 zugewandten Seite des Längsträgers 2 ist an dessen Unterseite 16 das Verstärkungsteil 5 angeordnet. Das Verstärkungsteil 5 ist W-förmig ausgebildet und an der Unterseite 16 und der Seitenwand 17 des Längsträgers 2 durch Punktschweißungen befestigt. Nach oben hin weist das Verstärkungsteil 5 zunächst einen in Richtung des Unterbodens 1 verlaufenden Abschnitt auf und endet schließlich in einen hochstehenden Schweißflansch, der zusammen mit dem Schweißflansch 12 des Unterbodens 1 am unteren Bereich des Radhauses 3 auf der Fläche 7 mittels Punktschweißungen befestigt ist. Nach oben hin ist die gesamte Verbindung aller Teile durch den Unterboden 1 abgedeckt.

In Figur 2 c ist die Befestigung des Verstärkungsteiles 5 am Längsträger 2 und Radhaus 3 in Schnittrichtung C-C zu sehen. In diesem Bereich des Befestigungsteiles 5 wurde die W-förmige Struktur aufgegeben und durch eine direkte Verbindung mittels eines Abschnittes 15, der sich vom unteren Bereich des Radhauses 3 zur Unterseite 16 des Längsträgers 2 erstreckt. Damit liegt das Verstärkungsteil 5 nicht mehr an der Seitenwand 17 des Längsträgers 2 und dem Unterboden 1 an, sondern stellt die direkte Verbindung zwischen der äußeren Fläche 7 des Radhauses 3 und Unterseite 16 des Längsträger 2 her. Das Verstärkungsteil 5 ist damit unterteilt in einen W-förmigen Randbereich, der an der Unterseite 16 und der Seitenwand 17 des Längsträgers 2 und dem Unterboden 1 und dem Radhaus 3 anliegt und zur Befestigung des Verstärkungsteiles 5 selbst dient, und einen Abschnitt 15, der die direkte Verbindung von Radhaus 3 und Längsträger 2 herstellt.

In Figur 3 ist ein Ausschnitt der Kraftfahrzeugkarosserie im Bereich des Verstärkungsteiles 5 zwischen Radhaus 3 und Längsträger 2 von der Unterseite her zu erkennen. An der Unterseite des Längsträgers 2 ist sowohl der Querträger 4 als auch das Verstärkungsteil 5 durch Punktschweißungen befestigt. In seinem weiteren Verlauf ist das Verstärkungsteil 5 mit seinen Rändern an der Seitenwand 17, dem Unterboden 1 und dem Radhaus 3 durch Punktschweißungen befestigt. Etwa mittig ist an dem Verstärkungsteil 5 ein Abschnitt 15 vorgesehen, der nicht mehr an der Seitenwand und dem Unterboden 1 anliegt, sondern das Radhaus 3 direkt mit der Unterseite 16 des Längsträgers 2 verbindet.

Die Anordnung des Verstärkungsteiles 5 an der Unterseite des Längsträgers 2 und dem Unterboden 1 bieten den Vorteil, daß das Teil nicht in den Fahrzeuginnenraum ragt. Wesentlicher Vorteil der Anordnung ist, daß im Fertigungsprozeß die Teile ohne erhöhten Aufwand zusammengefügt werden, indem Querträger 4, Längsträger 2, und Verstärkungsteil 5 durch Punktschweißungen in einer Unterbaugruppe miteinander befestigt werden und anschließend das Radhaus 3 und der Unterboden 1 von oben angefügt werden kann. Das Setzen der Punktschweißverbindungen zwischen Radhaus 3 und Unterboden bzw. Verstärkungsteil 5 bereitet keine Schwierigkeiten und kann in gewohnter Weise mit einer Schweißzange erfolgen, die entweder durch die hintere Türöffnung oder durch die Hecklappenöffnung greift. Im Gegensatz zum Stand der Technik sind also für das Verstärkungsteil keine nachträglichen, zusätzlichen Schweißoperationen notwendig

Die Bemessung des Verstärkungsteiles 5 erfolgt aus Gesichtspunkten der Versteifung, wobei dem direkten Abschnitt 15 besondere Bedeutung zukommt. Neben der Versteifung der Kraftfahrzeugkarosserie um die Längsachse bietet das Verstärkungsteil 5 den weiteren Vorteil, daß an einer zusätzlichen Stelle Kräfte aus dem Radhaus 3 in den Längsträger2 eingeleitet werden können, so daß die Krafteinleitung besser verteilt wird und die eigentliche Krafteinleitungstelle am Schweißflansch 11 nicht übermäßig beansprucht wird.

Die Krafteinleitung aus dem Federbein in die Unterbodengruppe erfolgt im unteren Bereich der Flächen 9 und 8 mittels hochstehender Schweißflansche 11 und 12 und damit möglichst dicht am Federbein 6, so daß mögliche Biegespannungen reduziert bzw. minimiert werden. Das Federbein 6 selbst besteht üblicherweise aus einer Feder und einem in der Feder angeordneten Stoßdämpfer, der hier jedoch nicht dargestellt ist. Das Feder- bzw. Dämpferbein 6 stützt sich nach oben hin gegen die Unterseite des Radhauses 3 ab und nach unten hin auf einem nicht dargestellten Achsschenkel.

In Figur 4 ist der vereinfachte Kräfteverlauf einer auf das Radhaus wirkenden, idealen Biegemomentbelastung Mt, die u. a. aus einer Torsionsbeanspruchung der Kraftfahrzeugkarosserie resultiert, dargestellt. Über die Verbindung mit dem Verstärkungsteil 5 zum Unterboden 1 wirkt das Moment Mt entsprechend entgegengesetzt im Querträger 4. Vereinfacht dargestellt wird das Moment Mt über die Kräftepaare F QI und F QII im Querträger und die Kräfte F RI und F RII im Radhaus. Aufgabe des Verstärkungsteiles 5 und dabei insbesondere des Abschnittes 15 ist es, die Kraft F RI umzulenken auf die Kraft F QII, was dargestellt wird durch die im Abschnitt 15 wirkenden Zugkräfte F BI bzw. F BII. Bei entgegengesetzter Torsionsbeanspruchung Mt drehen sich die Kräfte in ihrer Richtung um. Das Verstärkungsteil 5 und insbesondere der Abschnitt 15 wirken für die Verbindung zwischen Radhaus 3, Unterboden 1 und Längsträger 2 stabilisierend und vermindern so den Schamiereffekt zwischen Radhaus 3 und Unterboden 1 durch die Stützwirkung des Abschnittes 15.

Figur 5 zeigt eine weitere Ausführung des Verstärkungsteiles 5, bei der die quer verlaufende Fläche 9 geradlinig mit der Stegfläche 21 des Verstärkungsteiles verbunden ist. Die Funktion des Abschnittes 15 bleibt dabei vollständig erhalten, und zusätzlich wird eine noch bessere Anbindung des Radhauses 3 an den Unterboden 1 über die Stegfläche 21 erreicht.

Weiterhin ist gezeigt die direkte Anbindung der inneren Fläche 8 des Radhauses 3 an die Flanschfläche 22 des Verstärkungsteiles. Auf diese Weise kann auf den hochstehenden Schweißflansch 11 des Längsträgers 2 verzichtet werden; dessen Funktion wird von der Flanschfläche 22 übemommen.

## Patentansprüche

1. Kraftfahrzeugkarosserie mit einem in Fahrtrichtung hinten angeordneten, mit einem Unterboden (1) verbundenen Radhaus (3) und einer im Bereich des Radhauses (3) vorgesehenen Durchladeöffnung, einem im Radhaus (3) angeordneten Feder- bzw. Dämpferbein (6), wobei das Radhaus (3) im Bereich des Feder- bzw. Dämpferbeins (6) eine Ausbuchtung und der Unterboden (1) einen an das Radhaus (3) angrenzenden Längsträger (2) aufweist, wobei durch die Ausbuchtung eine vom Längsträger (2) beabstandete äußere Fläche (7) am Radhaus (3)entsteht,
**dadurch gekennzeichnet, daß**
zwischen der beabstandeten äußeren Fläche (7) und dem Längsträger (2) ein Verstärkungsteil (5) vorgesehen ist, wobei das Verstärkungsteil (5) im unteren Bereich der äußeren Fläche (7) und an der Unterseite (16) des Längsträgers (2) kraftschlüssig befestigt ist.

2. Kraftfahrzeugkarosserie nach Anspruch 1, **dadurch gekennzeichnet, daß** der Längsträger (2) im Querschnitt U-förmig nach oben geöffnet ist und das Verstärkungsteil (5) W-förmig ausgebildet ist und an der Unterseite (16) und der Seitenwand (17) des Längsträgers (2), dem Unterboden (1) und dem Radhaus (3) anliegt.

3. Kraftfahrzeugkarosserie nach einem der Ansprüche 1 oder 2, **dadurch gekennzeichnet, daß** der Längsträger (2) im Bereich der Ausbuchtung mit einem hochstehenden Schweißflansch (11) versehen ist, und daß das Radhaus (3) an einer sich in Richtung des Schweißflansches (11) erstreckenden innere Fläche (8) an dem Schweißflansch (11) befestigt ist.

4. Kraftfahrzeugkarosserie nach einem der Ansprüche 1 bis 3, **dadurch gekennzeichnet, daß** durch die Ausbuchtung im Radhaus (3) wenigstens zwei im wesentlichen in Fahrtrichtung verlaufende Flächen (7, 8) und wenigstens eine im wesentlichen quer zur Fahrtrichtung verlaufende Fläche (9) gebildet sind.

5. Kraftfahrzeugkarosserie nach einem der vorangegangenen Ansprüche, **dadurch gekennzeichnet, daß** ein Querträger (4) vorgesehen ist, welcher mit dem Längsträger (2) verbunden ist, und daß das Verstärkungsteil (5) im Bereich der Verbindungsstelle von Längsträger (2) und Querträger (4) an dem Längsträger (2) und/oder dem Querträger (4) befestigt ist.

6. Kraftfahrzeugkarosserie nach einem der vorangegangenen Ansprüche, **dadurch gekennzeichnet, daß** das Verstärkungsteil (5) im Bereich der Verbindung mit dem Längsträger (2) und/oder Querträger (4) nach oben hin wenigstens abschnittsweise vom Unterboden (1) abgedeckt ist.

7. Kraftfahrzeugkarosserie nach einem der vorangegangenen Ansprüche, **dadurch gekennzeichnet, daß** das Verstärkungsteil (5) einen Abschnitt (15) aufweist, der sich direkt vom Radhaus (3) zur Unterseite (16) des Längsträgers (2) erstreckt.

8. Kraftfahrzeugkarosserie nach einem der vorangegangenen Ansprüche, **dadurch gekennzeichnet, daß** die quer verlaufende Fläche (9) des Radhauses (3) in direkter Verbindung mit einer Stegfläche (21) des Verstärkungsteiles (5) steht.

9. Kraftfahrzeugkarosserie nach einem der vorangegangenen Ansprüche, **dadurch gekennzeichnet, daß** die innere Fläche (8) des Radhauses (3) in direkter Verbindung mit einer Flanschfläche (22) des Verstärkungsteiles (5) steht.

10. Kraftfahrzeugkarosserie nach einem der vorangegangenen Ansprüche, **dadurch gekennzeichnet, daß** das Verstärkungsteil (5) - in Fahrtrichtung gesehen - vor der Ausbuchtung angeordnet ist.

11. Kraftfahrzeugkarosserie nach einem der Ansprüche 1 bis 9, **dadurch gekennzeichnet, daß** das Verstärkungsteil (5) - in Fahrtrichtung gesehen - hinter der Ausbuchtung angeordnet ist.

12. Kraftfahrzeugkarosserie nach einem der Ansprüche 1 bis 9, **dadurch gekennzeichnet, daß** das Verstärkungsteil (5) einstückig ausgeführt ist und sich - in Fahrtrichtung gesehen - vor und hinter der Ausbuchtung erstreckt.

13. Kraftfahrzeugkarosserie nach Anspruch 12, **dadurch gekennzeichnet, daß** das Verstärkungsteil (5) mindestens zwei Abschnitte (15) aufweist, die die äußeren Flächen (7) des Radhauses (3) direkt mit dem Längsträger (2) verbinden.

## Claims

1. Motor vehicle body with a wheel house (3), which is arranged at the rear in the direction of travel and is connected to an underbody (1), and a through-loading opening, which is provided in the region of the wheel house (3), and a suspension strut or shock-absorber strut (6) arranged in the wheel house (3), the wheel house (3) having a projection in the region of the suspension strut or shock-absorber strut (6) and the underbody (1) having a longitudinal member (2) adjacent to the wheel house (3), with an outer surface (7) which is spaced apart from the longitudinal member (2) being produced on the wheel house (3) by the projection, **characterized in that** a reinforcing part (5) is provided between the spaced-apart, outer surface (7) and the longitudinal member (2), the reinforcing part (5) being fastened frictionally in the lower region of the outer surface (7) and to the lower side (16) of the longitudinal member (2).

2. Motor vehicle body according to Claim 1, **characterized in that** the longitudinal member (2) is upwardly open in a U-shaped manner in cross section and the reinforcing part (5) is of W-shaped design and bears against the lower side (16) and the side wall (17) of the longitudinal member (2), the underbody (1) and wheel house (3).

3. Motor vehicle body according to either of Claims 1 and 2, **characterized in that** the longitudinal member (2) is provided with an elevated welding flange (11) in the region of the projection, and **in that** the wheel house (3) is fastened to the welding flange (11) by way of an inner surface (8) extending in the direction of the welding flange (11).

4. Motor vehicle body according to one of Claims 1 to 3, **characterized in that** at least two surfaces (7, 8) running essentially in the direction of travel and at least one surface (9) running essentially transversely with respect to the direction of travel are formed by the projection in the wheel house (3).

5. Motor vehicle body according to one of the preceding claims, **characterized in that** a crossmember (4) is provided which is connected to the longitudinal member (2), and **in that** the reinforcing part (5) is fastened to the longitudinal member (2) and/or the crossmember (4) in the region of the point at which the longitudinal member (2) and crossmember (4) are connected.

6. Motor vehicle body according to one of the preceding claims, **characterized in that** the reinforcing part (5) is upwardly covered at least in some sections by the underbody (1) in the region of the connection to the longitudinal member (2) and/or crossmember (4).

7. Motor vehicle body according to one of the preceding claims, **characterized in that** the reinforcing part (5) has a section (15) which extends directly from the wheel house (3) to the lower side (16) of the longitudinal member (2).

8. Motor vehicle body according to one of the preceding claims, **characterized in that** the transversely running surface (9) of the wheel house (3) is directly connected to a web surface (21) of the reinforcing part (5).

9. Motor vehicle body according to one of the preceding claims, **characterized in that** the inner surface (8) of the wheel house (3) is directly connected to a flange surface (22) of the reinforcing part (5).

10. Motor vehicle body according to one of the preceding claims, **characterized in that** the reinforcing part (5) is arranged in front of the projection - as seen in the direction of travel.

11. Motor vehicle body according to one of Claims 1 to 9, **characterized in that** the reinforcing part (5) is arranged behind the projection - as seen in the direction of travel.

12. Motor vehicle body according to one of Claims 1 to 9, **characterized in that** the reinforcing part (5) is of single-piece design and extends in front of and behind the projection - as seen in the direction of travel.

13. Motor vehicle body according to Claim 12, **characterized in that** the reinforcing part (5) has at least two sections (15) which connect the outer surfaces (7) of the wheel house (3) directly to the longitudinal member (2).

## Revendications

1. Carrosserie de véhicule automobile comprenant un passage de roue (3) disposé à l'arrière dans la direction de conduite, connecté à un dessous de caisse (1) et une ouverture de chargement prévue dans la région du passage de roue (3), une jambe de force ou d'amortissement (6) disposée dans le passage de roue (3), le passage de roue (3) présentant, dans la région de la jambe de force ou d'amortissement (6) un bombement et le dessous de caisse (1) présentant un support longitudinal (2) adjacent au passage de roue (3), une surface extérieure (7) espacée du support longitudinal (2) étant formée du fait du bombement sur le passage de roue (3),
**caractérisée en ce que**
l'on prévoit une pièce de renforcement (5) entre la surface extérieure (7) espacée et le support longitudinal (2), la pièce de renforcement (5) étant fixée par engagement par force dans la région inférieure de la surface extérieure (7) et sur le côté inférieur (16) du support longitudinal (2).

2. Carrosserie de véhicule selon la revendication 1, **caractérisée en ce que** le support longitudinal (2) est ouvert vers le haut en forme de U en section transversale et la pièce de renforcement (5) est réalisée en forme de W et s'applique contre le côté inférieur (16) et la paroi latérale (17) du support longitudinal (2), le dessous de caisse (1) et le passage de roue (3).

3. Carrosserie de véhicule selon l'une quelconque des revendications 1 ou 2, **caractérisée en ce que** le support longitudinal (2) est pourvu dans la région du bombement d'une bride soudée dressée (11), et **en ce que** le passage de roue (3) est fixé à la bride soudée (11) au niveau d'une face intérieure (8) s'étendant dans la direction de la bride soudée (11).

4. Carrosserie de véhicule selon l'une quelconque des revendications 1 à 3, **caractérisée en ce qu'**au moins deux brides (7, 8) s'étendant essentiellement dans la direction de conduite et au moins une surface (9) s'étendant essentiellement transversalement à la direction de conduite sont formées par le bombement dans le passage de roue (3).

5. Carrosserie de véhicule selon l'une quelconque des revendications précédentes, **caractérisée en ce qu'**il est prévu un support transversal (4) qui est connecté au support longitudinal (2), et **en ce que** la pièce de renforcement (5) est fixée dans la région du point de connexion du support longitudinal (2) et du support transversal (4) sur le support longitudinal (2) et/ou sur le support transversal (4).

6. Carrosserie de véhicule selon l'une quelconque des revendications précédentes, **caractérisée en ce que** la pièce de renforcement (5) est recouverte au moins en partie par le dessous de caisse (1) dans la région de la connexion au support longitudinal (2) et/ou au support transversal (4) vers le haut.

7. Carrosserie de véhicule selon l'une quelconque des revendications précédentes, **caractérisée en ce que** la pièce de renforcement (5) présente une portion (15) qui s'étend directement depuis le passage de roue (3) jusqu'au côté inférieur (16) du support longitudinal (2).

8. Carrosserie de véhicule selon l'une quelconque des revendications précédentes, **caractérisée en ce que** la surface (9), s'étendant transversalement, du passage de roue (3), est en liaison directe avec une surface d'aile (21) de la pièce de renforcement (5).

9. Carrosserie de véhicule selon l'une quelconque des revendications précédentes, **caractérisée en ce que** la surface interne (8) du passage de roue (3) est en liaison directe avec une surface de bride (22) de la pièce de renforcement (5).

10. Carrosserie de véhicule selon l'une quelconque des revendications précédentes, **caractérisée en ce que** la pièce de renforcement (5) - vue dans la direction de conduite - est disposée avant le bombement.

11. Carrosserie de véhicule selon l'une quelconque des revendications 1 à 9, **caractérisée en ce que** la pièce de renforcement (5) - vue dans la direction de conduite - est disposée derrière le bombement.

12. Carrosserie de véhicule selon l'une quelconque des revendications 1 à 9, **caractérisée en ce que** la pièce de renforcement (5) est réalisée d'une seule pièce et s'étend - vu dans la direction de conduite - avant et derrière le bombement.

13. Carrosserie de véhicule selon la revendication 12, **caractérisée en ce que** la pièce de renforcement (5) présente au moins deux portions (15) qui relient les surfaces extérieures (7) du passage de roue (3) directement au support longitudinal (2).
